# EUROPEAN PATENT SPECIFICATION

(11) **EP 3 129 871 B1**
(45) Date of publication and mention of the grant of the patent: **04.03.2020**
(21) Application number: 15720142.7
(22) Date of filing: 09.04.2015
(51) Int. Cl.: G06F 9/44, G06F 9/451, G06T 1/00, G06T 11/00

(54) **GENERATING A SCREENSHOT**
ERZEUGUNG EINES SCREENSHOTS
GÉNÉRATION D'UN INSTANTANÉ D'ÉCRAN

(30) Priority: 11.04.2014 CN 201410146004; 08.04.2015 US 201514681412
(43) Date of publication of application: 15.02.2017
(73) Proprietor: Alibaba Group Holding Limited, Grand Cayman (KY)
(72) Inventor: YE, Jiahuan, Hangzhou 311121 (CN); CHEN, Yukun, Hangzhou 311121 (CN); JI, Xin, Hangzhou 311121 (CN); ZHAO, Pengjie, Hangzhou 311121 (CN); LIU, Linlin, Hangzhou 311121 (CN); XIE, Wenlong, Hangzhou 311121 (CN)
(74) Representative: McKinnon, Alistair James
(86) International application number: PCT/US2015/025118
(87) International publication number: WO 2015/157522

(56) References cited:
- US-A1- 2003 182 399
- US-A1- 2008 005 318
- US-A1- 2012 144 286
- US-B1- 6 684 207

## Description

### CROSS REFERENCE TO OTHER APPLICATIONS

This application claims priority to People's Republic of China Patent Application No. 201410146004.0 entitled A METHOD AND A DEVICE FOR IMPLEMENTING SCREENSHOTS, filed April 11, 2014.

### FIELD OF THE INVENTION

The present application relates to a field of computer technology. Specifically, the present application relates to techniques for implementing screenshots.

### BACKGROUND OF THE INVENTION

With the development of telecommunication technology, the functions of mobile phones and other mobile terminals are becoming ever more powerful. Not only can mobile terminals be used to place calls, they can also run various kinds of application software. It is not uncommon for mobile terminal users to want to generate a screenshot of the content displayed by a particular application that is running at a mobile terminal. For example, a user may want to save a screenshot of a video frame, a game image, or other images.

For certain types of operating systems that run on mobile terminals, different techniques need to be used to generate screenshots from different types of applications. For example, in the iOS operating system, a different screenshot generation technique may need to be used for iOS system native applications, iOS system video playing applications, and iOS system 2D or 3D game applications. As a result, application developers need to implement a different screenshot generation technique for each different application type. A user may be inconvenienced by needing to learn the different screenshot generation techniques corresponding to various different application types.

The document US 2003/0182399 discloses web access monitoring is accomplished by obtaining a plurality of graphical output images output by a processing system during use by a first user, processing the images into a video file, and a second user viewing the video file. Background data corresponding to each graphical image, such as the Uniform Resource Locator (URL) of a Web page being viewed and the time, is obtained and integrated into the video file.

The document US 6,684,207 discloses a system and method for analyzing data is described, in which an application programming interface (API) is provided to permit an online analytical processing (OLAP) application to manipulate data and queries in model close to the business model the OLAP application was designed to support.

The present invention is defined in the claims.

### BRIEF DESCRIPTION OF THE DRAWINGS

Various embodiments of the invention are disclosed in the following detailed description and the accompanying drawings.
FIG. 1 is a flow diagram showing an embodiment of a process for generating a screenshot.
FIG. 2 is a flow diagram showing an embodiment of a process for generating a screenshot.
FIG. 3 is a diagram showing an embodiment of a system for generating a screenshot.
FIG. 4 is a diagram showing an embodiment of a system for generating a screenshot.
FIG. 5 is a functional diagram illustrating an embodiment of a programmed computer system for generating a screenshot.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Embodiments of generating a screenshot are described herein. A screenshot command is received from an application. The application is currently running and displaying content at a mobile device. The screenshot command includes an application scenario parameter that identifies the application scenario of the application. Examples of application scenarios include a native application scenario, a video playing application scenario, and a game application scenario. A screenshot class corresponding to the application scenario parameter of the screenshot command is obtained and a screenshot object is generated from the obtained screenshot class. A screenshot is generated from content displayed by the application at a screen of the mobile device using the screenshot object. The screenshot is sent back to the application. In some embodiments, the screenshot is displayed at the screen and/or shared with at least one other user.

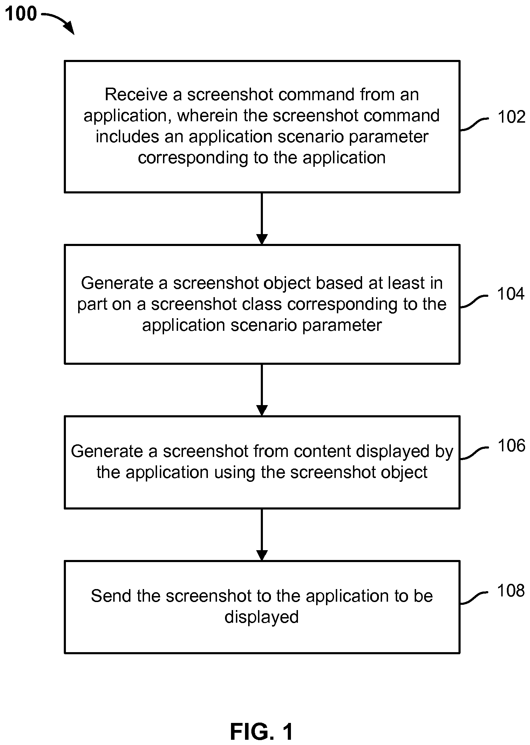

FIG. 1 is a flow diagram showing an embodiment of a process for generating a screenshot.

In various embodiments, process 100 is performed at a mobile device. Examples of a mobile device include a mobile phone, a smart phone, a tablet device, a laptop computer, or any other computing device. In some embodiments, process 100 is performed by an operating system of the mobile device. In some embodiments, the operating system comprises an iOS operating system. In some embodiments, process 100 is performed by a screenshot generation mechanism that is executing at the mobile device that is not an operating system.

At 102, a screenshot command is received from an application, wherein the screenshot command includes an application scenario parameter corresponding to the application.

In various embodiments, a "screenshot command" received from an application comprises a call or invocation to perform a screenshot of content displayed by that application. The application is currently executing at the mobile device and is also displaying content at the screen of the mobile device. In some embodiments, the screenshot command comprises an application programming interface (API) call. In various embodiments, a screenshot software development kit (SDK) that includes a screenshot library (e.g., in a language compatible with the platform and/or operating system executing at the mobile device) and an interface for accessing the screenshot library was provided to a developer of the application so that the developer of the application can configure the functions of the application to integrate with the screenshot SDK during the process of developing the application.

In various embodiments, the screenshot command was generated by the application in response to detection of a predetermined screenshot action that was performed by a user of the mobile device while the application was running. The predetermined screenshot action is configured to trigger the generation of a screenshot of the content displayed by the currently executing application at the screen of the mobile device. In some embodiments, the predetermined screenshot action is configured by the screenshot library of the SDK that was integrated with the application at the application's development time. For example, the predetermined screenshot action comprises a shaking of the mobile device, an activation of a screenshot button, or a captured gesture performed by the user. For example, the shaking of the mobile device can be detected by a motion sensor that is embedded in the mobile device. For example, the activation of a screenshot button may be an activation of a hardware button or a presented soft button (e.g., a button user interface widget) that is configured to trigger a screenshot generation. For example, a captured gesture by the user comprises a user's hand movement that can be detected by a gesture capture sensor (e.g., a camera or an infrared sensor).

In various embodiments, the application that passed the screenshot command is associated with an application scenario. Examples of application scenarios include a native application scenario, a video playing application scenario, and a game application scenario. For example, a "native application scenario" refers to an application that is developed for use on a particular platform or operating system. For example, a "video playing application scenario" refers to an application that is configured to play or stream a video. For example, a "game application scenario" refers to an application that is configured to provide an interactive game. Each application scenario is associated with a corresponding application scenario parameter that identifies the application scenario. For example, each application scenario parameter comprises a different number. In some embodiments, corresponding relationships between application scenario parameters and application scenarios are stored at a known storage location (e.g., a known file location or a known address in memory.) For example, the native application scenario parameter corresponding to the native application scenario can be set to 1001; the video playing application scenario parameter corresponding to the video playing application scenario can be set to 1002; the game application scenario parameter corresponding to the game application scenario can be set to 1003. Other numbers or encoding schemes can be used.

In various embodiments, the screenshot command includes the application scenario parameter that corresponds to the application scenario of the application that had generated and sent the screenshot command. For example, assuming that the predetermined screenshot generation action is shaking the mobile device, a user can trigger a screenshot of a currently running application to be generated by shaking the mobile device. A component of (e.g., a motion sensor embedded in) the mobile sensor will detect the shaking motion. In some embodiments, the operating system detects the shaking motion and causes the currently running application to generate a screenshot command that includes the application scenario parameter corresponding to the application scenario of that application. As will be described in further detail below, the screenshot command and the application scenario parameter therein will be used to generate a screenshot of the currently running application. As such, the process of triggering the generation of a screenshot associated with a currently running application is fast and convenient for the user of the mobile device.

At 104, a screenshot object is generated based at least in part on a screenshot class corresponding to the application scenario parameter.

In various embodiments, a corresponding screenshot class can be developed by the application developer to correspond to the application scenario of the application. For example, a native application screenshot class can be developed by the developer of a native application, a video playing application screenshot class can be developed by the developer of a video playing application, and a game application screenshot class can be developed by the developer of a game application. These classes can be developed using an object-oriented programming language such as Objective-C. In some embodiments, the developer of an application generates a screenshot class that corresponds to the application's scenario by applying object-oriented programming inheritance to a base screenshot class included in the screenshot SDK. The base screenshot class is generic to different application scenarios. In some embodiments, a screenshot object instantiated from the base screenshot class is configured to generate a screenshot of an application with default settings/features. Inheritance enables the developer of a particular application scenario to use the screenshot features of the base class but also add custom elements to meet the needs of his or her application scenario. For example, the custom elements of a screenshot class corresponding to an application scenario may include a particular manner in which the screenshot is generated (e.g., the size, the resolution, the colors) and a particular manner in which the screenshot is to be shared (e.g., with which social media platforms).

In various embodiments, the mobile device is configured to store the screenshot class corresponding to each application scenario. In various embodiments, the mobile device is also configured to store corresponding relationships between the screenshot class corresponding to each application scenario and an application scenario parameter. For example, the native application screenshot class corresponds to the native application scenario parameter (e.g., 1001); the video playing application screenshot class corresponds to the video playing application scenario parameter (e.g., 1002); the game application screenshot class corresponds to the game application scenario parameter (e.g., 1003).

Based on the application scenario parameter included in the screenshot command, the corresponding screenshot class can be identified and a screenshot object can be instantiated based on the identified screenshot class. For example, if a game application scenario parameter is included in the screenshot command, then the game application screenshot class is identified and a screenshot is generated therefrom.

At 106, a screenshot is generated from content displayed by the application using the screenshot object.

The screenshot object is configured to invoke the operating system executing at the mobile device to generate a screenshot of the content displayed by the currently running application that had issued the screenshot command. In some embodiments, the screenshot that is generated by the operating system is generated based on the custom elements/settings/features of the screenshot class from which the screenshot object was instantiated. The generated screenshot may comprise an image file, for example.

The following is an example code in Objective-C used by the screenshot object to generate the screenshot:

```
 -(UIImage *)getScreenShot
 {
 // Create a graphics context with the target size
 // Depending on the version of the operating system that is executing, use either
 UIGraphicsBeginImageContextWithOptions to take the scale into consideration or use
 UIGraphicsBeginImageContext
 CGSize imageSize = [[UlScreen mainScreen] bounds].size;
 if (NULL != UIGraphicsBeginImageContextWithOptions)
 UIGraphicsBeginImageContextWithOptions(imageSize, NO, 0);
 else
 UIGraphicsBeginImageContext(imageSize);
 CGContextRef context = UIGraphicsGetCurrentContext();
 // Iterate over every window from back to front
 for (UIWindow *window in [[UIApplication sharedApplication] windows])
 {
 if (! [window respondsToSelector:@selector(screen)] || [window screen] ==
 [UlScreen mainScreen])
 {
 // -renderInContext: renders in the coordinate space of the layer,
 // First apply the layer's geometry to the graphics context
 CGContextSaveGState(context);
 // Center the context around the window's anchor point
 CGContextTranslateCTM(context, [window center].x, [window center].y);
 // Apply the window's transform about the anchor point
 CGContextConcatCTM(context, [window transform]);
 // Offset by the portion of the bounds left of and above the anchor point
 CGContextTranslateCTM(context,
 -[window bounds].size.width * [[window layer]
 anchorPoint] .x,
 -[window bounds].size.height * [[window layer]
 anchorPoint].y);
 // Render the layer hierarchy to the current context
 [[[window layer] renderInContext:context];
  // Restore the context
 CGContextRestoreGState(context);
 }
 }
 // Retrieve the screenshot image
 UIImage *image = UIGraphicsGetImageFromCurrentImageContext();
 UIGraphicsEndImageContext();
  UIInterfaceOrientation orientation = [UIApplication
 sharedApplication]. statusBarOrientation;
 if (orientation == UIInterfaceOrientationLandscapeLeft) {
 image = [UIImage imageWithCGImage:image.CGImage scale:image.scale
 orientation:UIImageOrientationRight];
 } else if (orientation == UIInterfaceOrientationLandscapeRight) {
 image = [UIImage imageWithCGImage:image.CGImage scale:image.scale
 orientation:UIImageOrientationLeft];
 } else if (orientation == UIInterfaceOrientationPortraitUpsideDown) {
 image = [UIImage imageWithCGImage:image.CGImage scale:image.scale
 orientation:UIImageOrientationDown];
 }
 return image;
}
```

For example, if the screenshot object were instantiated from the game application screenshot class, then the screenshot object may invoke the operating system to generate a screenshot of the game screen using the custom elements of the game application screenshot class. Due to the custom elements of the screenshot class from which the screenshot object was instantiated, the generated screenshot may be different from a screenshot that would have otherwise been generated using a default screenshot generation technique provided by the operating system or using a screenshot object generated from the base screenshot class.

At 108, the screenshot is sent to the application to be displayed.

The screenshot (e.g., an image file) is passed back to the application that had issued the screenshot command. In some embodiments, the application presents the screenshot at the mobile device screen. In some embodiments, the application presents one or more processing options with respect to the screenshot to the user. For example, processing options with respect to the screenshot include the option to store the screenshot and the option to share the screenshot at a platform (e.g., a social media platform) or with at least one other user.

The following is a first example of using process 100: a user of the mobile device is viewing a video played by a currently running video playing application and wishes to take a screenshot of the current video screen. In this example, assume that the predetermined screenshot generation action is shaking the mobile device. As such, to generate the screenshot of the current video screen, the user needs only to shake the mobile device to cause a screenshot command to be generated and sent. The screenshot command includes a video playing application scenario parameter (e.g., 1002). After the screenshot command is received by the operating system or other mechanism that is configured to perform process 100, the application scenario of the currently running application is identified as a video playing application based on the video playing application scenario parameter (e.g., 1002) that is included in the screenshot command. Then, a screenshot object of a video playing application screenshot class corresponding to the video playing application scenario parameter is generated and the generated screenshot object is used to generate a screenshot of the current screen of the currently running application. The screenshot of the current screen of the currently running application is then passed back to the video playing application.

The following is a second example of using process 100: an end user is playing a game provided by a currently running game application and wishes to take a screenshot of the current game screen. In the example, assume that the predetermined screenshot generation action is shaking the mobile device. As such, to generate the screenshot of the current game screen, the user needs only to shake the mobile device to cause a screenshot command to be generated and sent. The screenshot command includes a game application scenario parameter (e.g., 1003). After the screenshot command is received by the operating system or other mechanism that is configured to perform process 100, the application scenario of the currently running application is identified as a game application based on the game application scenario parameter (e.g., 1003) that is included in the screenshot command. Then, a screenshot object of a game application screenshot class corresponding to the game application scenario parameter is generated and the generated screenshot object is used to generate a screenshot of the current screen of the currently running application. The screenshot of the current screen of the currently running application is then passed back to the game application.

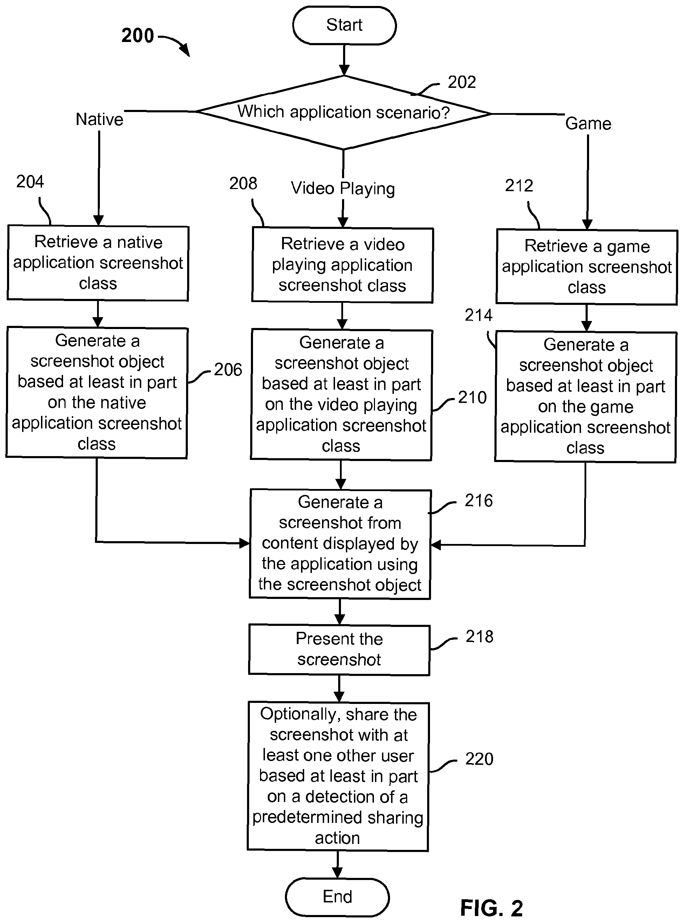

FIG. 2 is a flow diagram showing an embodiment of a process for generating a screenshot. In some embodiments, steps 104, 106, and 108 of process 100 of FIG. 1 are implemented, at least in part, using process 200.

At 202, an application scenario corresponding to an application scenario parameter included in a screenshot command is determined. The application scenario parameter included in a screenshot command received from an application is extracted. In some embodiments, the extracted application scenario parameter is compared against the stored corresponding relationships between application scenario parameters and application scenarios to determine the application scenario that corresponds to the extracted application scenario parameter. In the example of process 200, the three possible application scenarios include a native application, a video playing application, or a game application.

In the event that the extracted application scenario parameter corresponds to a native application, control is transferred to step 204. In the event that the extracted application scenario parameter corresponds to a video playing application, control is transferred to step 208. In the event that the extracted application scenario parameter corresponds to a game application, control is transferred to step 212.

At 204, a native application screenshot class is retrieved. At least the native application screenshot class is obtained from storage. In some embodiments, the native application screenshot class is created by a developer of the native application using object-oriented programming inheritance of a base screenshot class included in the screenshot SDK. The native application screenshot class includes additional methods and/or other features that are not included in the base screenshot class but are tailored for generating a screenshot from a native application. The native application screenshot class includes custom settings/features for generating screenshots from applications associated with the native application scenario. Both the native application screenshot class and the base screenshot class are stored at the mobile device. In the event that the native application screenshot class is a subclass of (e.g., inherits from) the base screenshot class, then both the native application screenshot class and the base screenshot class are retrieved from storage.

At 206, a screenshot object is generated based at least in part on the native application screenshot class. A screenshot object is instantiated from the obtained native application screenshot class. The screenshot object instantiated from the obtained native application screenshot class is configured to invoke the operating system of the mobile device to generate a screenshot from the content displayed by the native application that is currently running at the mobile device with any custom settings/features provided by the native application screenshot class.

At 208, a video playing application screenshot class is retrieved. At least the video playing application screenshot class is obtained from storage. In some embodiments, the video playing application screenshot class is created by a developer of the video playing application using object-oriented programming inheritance of a base screenshot class included in the screenshot SDK. The video playing application screenshot class includes additional methods and/or other features that are not included in the base screenshot class but are tailored for generating a screenshot from a video playing application. The video playing application screenshot class includes custom settings/features for generating screenshots from applications associated with the video playing application scenario. Both the video playing application screenshot class and the base screenshot class are stored at the mobile device. In the event that the video playing application screenshot class is a subclass of (e.g., inherits from) the base screenshot class, then both the video playing application screenshot class and the base screenshot class are retrieved from storage.

At 210, a screenshot object is generated based at least in part on the video playing application screenshot class. A screenshot object is instantiated from the obtained video playing application screenshot class. The screenshot object instantiated from the obtained video playing application screenshot class is configured to invoke the operating system of the mobile device to generate a screenshot from the content displayed by the video playing application that is currently running at the mobile device with any custom settings/features provided by the video playing application screenshot class.

At 212, a game application screenshot class is retrieved. At least the game application screenshot class is obtained from storage. In some embodiments, the game application screenshot class is created by a developer of the game application using object-oriented programming inheritance of a base screenshot class included in the screenshot SDK. The game application screenshot class includes additional methods and/or other features that are not included in the base screenshot class but are tailored for generating a screenshot from a game application. The game application screenshot class includes custom settings/features for generating screenshots from applications associated with the game application scenario. Both the game application screenshot class and the base screenshot class are stored at the mobile device. In the event that the game application screenshot class is a subclass of (e.g., inherits from) the base screenshot class, then both the game application screenshot class and the base screenshot class are retrieved from storage.

At 214, a screenshot object is generated based at least in part on the game application screenshot class. A screenshot object is instantiated from the obtained game application screenshot class. The screenshot object instantiated from the obtained game application screenshot class is configured to invoke the operating system of the mobile device to generate a screenshot from the content displayed by the game application that is currently running at the mobile device with any custom settings/features provided by the game application screenshot class.

At 216, a screenshot is generated from content displayed by the application using the screenshot object. The screenshot object (instantiated from one of the native application screenshot class, the video playing application screenshot class, and the game application screenshot class) is configured to invoke the operating system executing at the mobile device to generate a screenshot of the content displayed by the currently running application that had issued the screenshot command. In some embodiments, the screenshot that is generated by the operating system is generated based on the custom elements/settings/features of the screenshot class from which the screenshot object was instantiated. The screenshot may comprise an image file, for example.

At 218, the screenshot is presented. The generated screenshot is presented at the screen of the mobile device for the user of the mobile device to view. For example, the user is presented with options to store, share, or discard the screenshot after viewing it. In some embodiments, the screenshot is first passed back to the application and is then presented by the application at the mobile device.

At 220, optionally, the screenshot is shared with at least one user based at least in part on a detection of a predetermined sharing action. The user of the mobile device may wish to share the screenshot with one or more other users. In some embodiments, the user can perform a predetermined sharing action using the mobile device in order to share the screenshot. For example, the predetermined sharing action can also be shaking the mobile device while the screenshot is displayed at the screen of the mobile device. A sensor (e.g., a motion sensor) included in the mobile device can detect a predetermined sharing action and in response, cause the screenshot to be shared. For example, in response to detecting a predetermined sharing action, the mobile device is configured to present one or more options associated with sharing the screenshot to the user. Examples of options associated with sharing the screenshot include which other user(s) (e.g., a mobile device of a contact and/or other user with a stored friendship relationship to the user) the user wishes to send the screenshot to and/or at which social media platform(s) or cloud storage platform(s) the user wishes to upload the screenshot. Therefore, the process of creating and sharing a screenshot from a currently running application is made very fast and simple for the user of the mobile device.

Using the techniques described above, a user of a mobile device is enabled to perform the same predetermined screenshot action with respect to the mobile device to cause a screenshot to be generated from the content displayed by the currently running application, regardless of which application scenario the application is associated with. Furthermore, the screenshot generated from an application corresponding to each application scenario may also include custom settings/features specific to that application scenario. As such, the user does not need to spend time and/or energy to learn potentially different and complicated screenshot generation techniques for applications associated with different application scenarios. The user can learn and use a uniform predetermined screenshot action to cause a screenshot to be generated for applications of various application scenarios for a more convenient and enjoyable user experience.

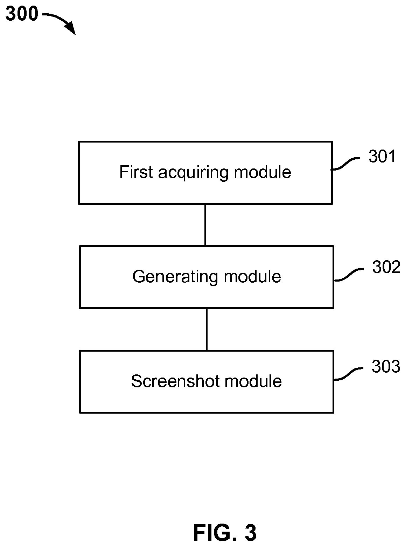

FIG. 3 is a diagram showing an embodiment of a system for generating a screenshot. In the example, system 300 includes: first acquiring module 301, generating module 302, and screenshot module 303.

The modules and units can be implemented as software components executing on one or more processors, as hardware such as programmable logic devices, and/or Application Specific Integrated Circuits designed to elements can be embodied by a form of software products which can be stored in a nonvolatile storage medium (such as optical disk, flash storage device, mobile hard disk, etc.), including a number of instructions for making a computer device (such as personal computers, servers, network equipment, etc.) implement the methods described in the embodiments of the present invention. The modules and units may be implemented on a single device or distributed across multiple devices.

First acquiring module 301 is configured to receive a screenshot command from an application. The application is currently running at a mobile device and displaying content at the screen of the mobile device. The screenshot command includes an application scenario parameter. For example, the application scenario parameter comprises a native application scenario parameter, a video playing application scenario parameter, or a game application scenario parameter.

Generating module 302 is configured to generate a screenshot object based at least in part on a screenshot class corresponding to the application scenario parameter. For example, the native application scenario parameter corresponds to a native application screenshot class, the video playing application scenario parameter corresponds to a video playing application screenshot class, and the game application scenario parameter corresponds to a game application screenshot class.

Screenshot module 303 is configured to generate a screenshot from content displayed by the application using the screenshot object. In some embodiments, screenshot module 303 is configured to send the screenshot to the application.

In some embodiments, first acquiring module 301 further comprises:
An acquiring unit that is configured to generate a screenshot command in response to detection of a predetermined screenshot action. For example, the predetermined screenshot action comprises the shaking of a mobile device.

In some embodiments, generating module 302 further comprises:
An assessing unit that is configured to determine an application scenario associated with the application scenario parameter that is included in the screenshot command.

A first looking up unit that is configured to obtain the native application screenshot class in the event that the application scenario parameter included in the screenshot command is a native application scenario parameter.

A first generating unit that is configured to generate a screenshot object from the native application screenshot class.

Correspondingly, in some embodiments, screenshot module 303 further comprises:
A first screenshot unit that is configured to use the screenshot object generated from the native application screenshot class to generate a screenshot from the content displayed by the currently running native application. In some embodiments, the screenshot object is configured to generate a screenshot by invoking the operating system of the mobile device to generate a screenshot.

In some embodiments, generating module 302 further comprises:
A second looking up unit that is configured to obtain the video playing application screenshot class in the event that the application scenario parameter included in the screenshot command is a video playing application scenario parameter.

A second generating unit that is configured to generate a screenshot object from the video playing application screenshot class.

In some embodiments, screenshot module 303 further comprises:
A second screenshot unit that is configured to use the screenshot object generated from the video playing application screenshot class to generate a screenshot from the content displayed by the currently running video playing application. In some embodiments, the screenshot object is configured to generate a screenshot by invoking the operating system of the mobile device to generate a screenshot.

Furthermore, generating module 302 further comprises:
A third looking up unit that is configured to obtain the game application screenshot class in the event that the application scenario parameter included in the screenshot command is a game application scenario parameter.

A third generating unit that is configured to generate a screenshot object from the game application screenshot class.

Correspondingly, in some embodiments, screenshot module 303 further comprises:
A third screenshot unit that is configured to use the screenshot object generated from the game application screenshot class to generate a screenshot from the content displayed by the currently running game application. In some embodiments, the screenshot object is configured to generate a screenshot by invoking the operating system of the mobile device to generate a screenshot.

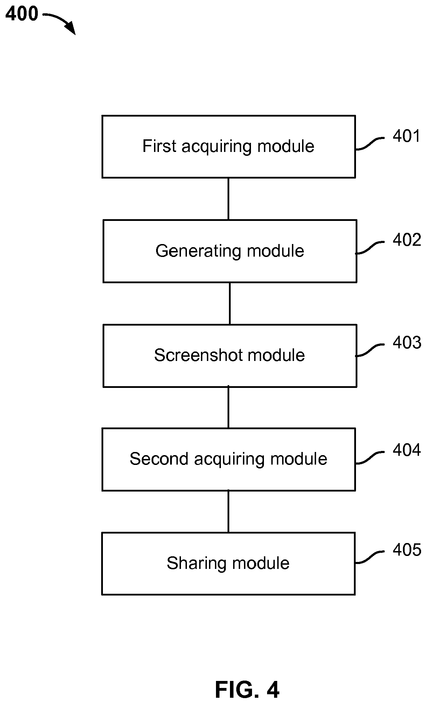

FIG. 4 is a diagram showing an embodiment of a system for generating a screenshot. In the example, system 400 includes: first acquiring module 401, generating module 402, screenshot module 403, second acquiring module 404, and sharing module 405.

The modules and units can be implemented as software components executing on one or more processors, as hardware such as programmable logic devices, and/or Application Specific Integrated Circuits designed to elements can be embodied by a form of software products which can be stored in a nonvolatile storage medium (such as optical disk, flash storage device, mobile hard disk, etc.), including a number of instructions for making a computer device (such as personal computers, servers, network equipment, etc.) implement the methods described in the embodiments of the present invention. The modules and units may be implemented on a single device or distributed across multiple devices.

First acquiring module 401, generating module 402, and screenshot module 403 may be implemented similarly to first acquiring module 301, generating module 302, and screenshot module 303, respectively, of system 300 of FIG. 3.

Second acquiring module 404 is configured to detect a predetermined sharing action. For example, the predetermined sharing action comprises the shaking of the mobile device.

Sharing module 405 is configured to share the screenshot generated by the screenshot object.

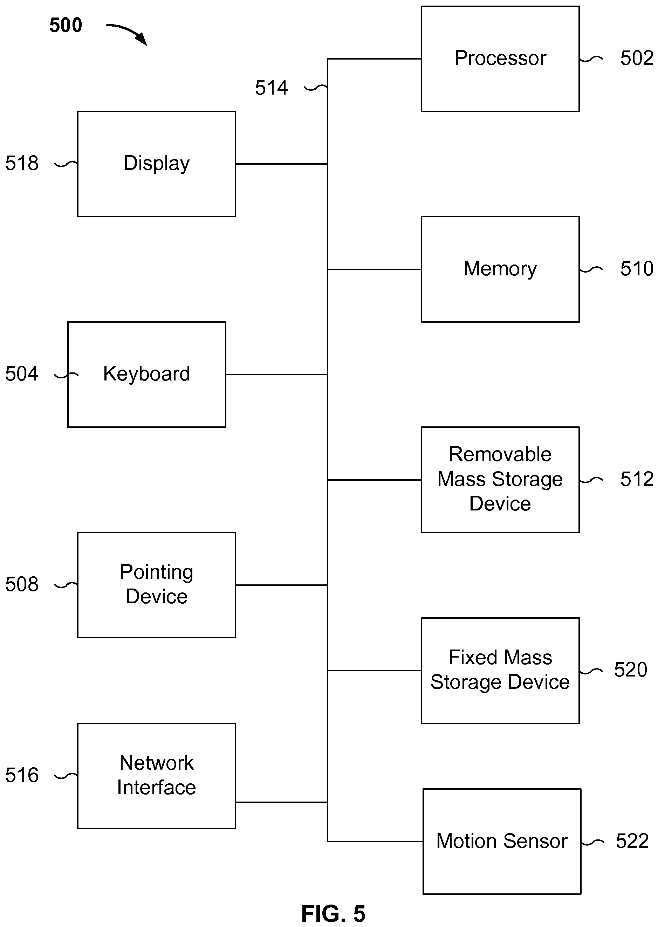

FIG. 5 is a functional diagram illustrating an embodiment of a programmed computer system for generating a screenshot. As will be apparent, other computer system architectures and configurations can be used to generate a screenshot. Computer system 500, which includes various subsystems as described below, includes at least one microprocessor subsystem (also referred to as a processor or a central processing unit (CPU)) 502. For example, processor 502 can be implemented by a single-chip processor or by multiple processors. In some embodiments, processor 502 is a general purpose digital processor that controls the operation of the computer system 500. Using instructions retrieved from memory 510, the processor 502 controls the reception and manipulation of input data, and the output and display of data on output devices (e.g., display 518). In some embodiments, processor 502 includes and/or is used to generate a screenshot. In some embodiments, motion sensor 522 is configured to detect a user action that comprises a predetermined screenshot action or a predetermined sharing action.

Processor 502 is coupled bi-directionally with memory 510, which can include a first primary storage area, typically a random access memory (RAM), and a second primary storage area, typically a read-only memory (ROM). As is well known in the art, primary storage can be used as a general storage area and as scratch-pad memory, and can also be used to store input data and processed data. Primary storage can also store programming instructions and data, in the form of data objects and text objects, in addition to other data and instructions for processes operating on processor 502. Also as is well known in the art, primary storage typically includes basic operating instructions, program code, data, and objects used by the processor 502 to perform its functions (e.g., programmed instructions). For example, memory 510 can include any suitable computer readable storage media, described below, depending on whether, for example, data access needs to be bi-directional or uni-directional. For example, processor 502 can also directly and very rapidly retrieve and store frequently needed data in a cache memory (not shown).

A removable mass storage device 512 provides additional data storage capacity for the computer system 500 and is coupled either bi-directionally (read/write) or uni-directionally (read only) to processor 502. For example, storage 512 can also include computer readable media such as magnetic tape, flash memory, PC-CARDS, portable mass storage devices, holographic storage devices, and other storage devices. A fixed mass storage 520 can also, for example, provide additional data storage capacity. The most common example of fixed mass storage 520 is a hard disk drive. Mass storages 512, 520 generally store additional programming instructions, data, and the like that typically are not in active use by the processor 502. It will be appreciated that the information retained within mass storages 512 and 520 can be incorporated, if needed, in standard fashion as part of memory 510 (e.g., RAM) as virtual memory.

In addition to providing processor 502 access to storage subsystems, bus 514 can also be used to provide access to other subsystems and devices. As shown, these can include a display 518, a network interface 516, a keyboard 504, and a pointing device 508, as well as an auxiliary input/output device interface, a sound card, speakers, and other subsystems as needed. For example, the pointing device 508 can be a mouse, stylus, track ball, or tablet, and is useful for interacting with a graphical user interface.

The network interface 516 allows processor 502 to be coupled to another computer, computer network, or telecommunications network using a network connection as shown. For example, through the network interface 516, the processor 502 can receive information (e.g., data objects or program instructions) from another network or output information to another network in the course of performing method/process steps. Information, often represented as a sequence of instructions to be executed on a processor, can be received from and outputted to another network. An interface card or similar device and appropriate software implemented by (e.g., executed/performed on) processor 502 can be used to connect the computer system 500 to an external network and transfer data according to standard protocols. For example, various process embodiments disclosed herein can be executed on processor 502, or can be performed across a network such as the Internet, intranet networks, or local area networks, in conjunction with a remote processor that shares a portion of the processing. Additional mass storage devices (not shown) can also be connected to processor 502 through network interface 516.

An auxiliary I/O device interface (not shown) can be used in conjunction with computer system 500. The auxiliary I/O device interface can include general and customized interfaces that allow the processor 502 to send and, more typically, receive data from other devices such as microphones, touch-sensitive displays, transducer card readers, tape readers, voice or handwriting recognizers, biometrics readers, cameras, portable mass storage devices, and other computers.

The above description presents and describes some embodiments of the present application. However, as stated above, the present application is to be understood as not being limited to the forms disclosed in the present document, and the fact of their disclosure shall not be regarded as excluding other embodiments, rather, they may be used in various other combinations, modifications, and environments, and they can be altered using the technology or knowledge of related fields or the guidelines stated above while remaining in the scope of the invention set forth in the claims.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A system, comprising:
one or more processors configured to:
receive (102) a screenshot command from an application, wherein the screenshot command includes an application scenario parameter corresponding to the application, wherein the application scenario parameter comprises a value that identifies an application type of the application;
determine that the application scenario parameter corresponds to a matching application scenario, wherein the matching application scenario is among a plurality of possible application scenarios, wherein the plurality of possible application scenarios comprises a plurality of application types;
obtain a screenshot class corresponding to the matching application scenario by retrieving the screenshot class from a storage;
generate (104) a screenshot object based at least in part on the screenshot class, wherein the screenshot class comprises one or more custom elements associated with generating a screenshot associated with the application scenario parameter, wherein the one or more custom elements describe at least an appearance of the screenshot to be generated;
generate (106) the screenshot from content displayed by the application using the screenshot object, wherein the screenshot is generated based at least in part on the one or more custom elements associated with generating the screenshot associated with the application scenario parameter; and
send (108) the screenshot to the application to be displayed; and
one or more memories coupled to the one or more processors and configured to provide the one or more processors with instructions.

2. The system of claim 1, wherein the screenshot command is generated in response to detection of a predetermined screenshot action.

3. The system of claim 1, wherein the application is executing at a mobile device.

4. The system of claim 1, wherein the screenshot object is configured to invoke an operating system to generate the screenshot.

5. The system of claim 1, wherein the one or more processors are further configured to detect a predetermined sharing action.

6. The system of claim 5, wherein the one or more processors are further configured to share the screenshot with at least one user.

7. A method, comprising:
receiving (102) a screenshot command from an application, wherein the screenshot command includes an application scenario parameter corresponding to the application, wherein the application scenario parameter comprises a value that identifies an application type of the application;
determining that the application scenario parameter corresponds to a matching application scenario, wherein the matching application scenario is among a plurality of possible application scenarios, wherein the plurality of possible application scenarios comprises a plurality of application types;
obtaining a screenshot class corresponding to the matching application scenario by retrieving the screenshot class from a storage;
generating (104), using one or more processors, the screenshot object based at least in part on a screenshot class, wherein the screenshot class comprises one or more custom elements associated with generating a screenshot associated with the application scenario parameter, wherein the one or more custom elements describe at least an appearance of the screenshot to be generated;
generating (106) the screenshot from content displayed by the application using the screenshot object, wherein the screenshot is generated based at least in part on the one or more custom elements associated with generating the screenshot associated with the application scenario parameter; and
sending (108) the screenshot to the application to be displayed.

8. The method of claim 7, wherein the screenshot command is generated in response to detection of a predetermined screenshot action.

9. The method of claim 7, wherein the application is executing at a mobile device.

10. The system of claim 1 or the method of claim 7, wherein the value of the application scenario parameter comprises one or more of the following: a native application scenario parameter value, a video playing application scenario parameter value, or a game application scenario parameter value, wherein the native application scenario parameter value is associated with a native application, wherein the native application is an operating system specific application.

11. The system of claim 1 or the method of claim 7, wherein in the event that the value of the application scenario parameter comprises a native application scenario parameter value, the screenshot class comprises a native application screenshot class, wherein the native application scenario parameter is associated with a native application, wherein the native application is an operating system specific application.

12. The system of claim 1 or the method of claim 7, wherein in the event that the value of the application scenario parameter comprises a video playing application scenario parameter value, the screenshot class comprises a video playing application screenshot class.

13. The system of claim 1 or the method of claim 7, wherein in the event that the value of the application scenario parameter comprises a game application scenario parameter value, the screenshot class comprises a game application screenshot class.

14. The system of claim 1 or the method of claim 7, wherein the screenshot class corresponding to the matching application scenario is derived from a base screenshot class.

15. A computer program product, the computer program product being embodied in a non- transitory computer readable storage medium and comprising computer instructions for:
receiving (102) a screenshot command from an application, wherein the screenshot command includes an application scenario parameter corresponding to the application, wherein the application scenario parameter comprises a value that identifies an application type of the application;
determining that the application scenario parameter corresponds to a matching application scenario, wherein the matching application scenario is among a plurality of possible application scenarios, wherein the plurality of possible application scenarios comprises a plurality of application types;
obtaining a screenshot class corresponding to the matching application scenario by retrieving the screenshot class from a storage;
generating (104) a screenshot object based at least in part on the screenshot class, wherein the screenshot class comprises one or more custom elements associated with generating a screenshot associated with the application scenario parameter, wherein the one or more custom elements describe at least an appearance of the screenshot to be generated;
generating (106) the screenshot from content displayed by the application using the screenshot object, wherein the screenshot is generated based at least in part on the one or more custom elements associated with generating the screenshot associated with the application scenario parameter; and
sending (108) the screenshot to the application to be displayed.

## Patentansprüche

1. System, das Folgendes umfasst:
einen oder mehrere Prozessoren, konfiguriert zum:
Empfangen (102) eines Screenshot-Befehls von einer Anwendung, wobei der Screenshot-Befehl einen Anwendungsszenarioparameter entsprechend der Anwendung beinhaltet, wobei der Anwendungsszenarioparameter einen Wert umfasst, der einen Anwendungstyp der Anwendung identifiziert;
Feststellen, dass der Anwendungsszenarioparameter einem passenden Anwendungsszenario entspricht, wobei sich das passende Anwendungsszenario unter mehreren möglichen Anwendungsszenarios befindet, wobei die mehreren möglichen Anwendungsszenarios mehrere Anwendungstypen umfassen;
Einholen einer Screenshot-Klasse entsprechend dem passenden Anwendungsszenario durch Abrufen der Screenshot-Klasse aus einem Speicher;
Erzeugen (104) eines Screenshot-Objekts wenigstens teilweise auf der Basis der Screenshot-Klasse, wobei die Screenshot-Klasse ein oder mehrere spezifische Elemente umfasst, die mit dem Erzeugen eines mit dem Anwendungsszenarioparameter assoziierten Screenshot assoziiert sind, wobei die ein oder mehreren spezifischen Elemente wenigstens ein Aussehen des zu erzeugenden Screenshot beschreiben;
Erzeugen (106) des Screenshot von von der Anwendung angezeigtem Inhalt anhand des Screenshot-Objekts, wobei der Screenshot wenigstens teilweise auf der Basis der ein oder mehreren Elemente erzeugt wird, die mit dem Erzeugen des mit dem Anwendungsszenarioparameter assoziierten Screenshot assoziiert sind; und
Senden (108) des Screenshot zu der anzuzeigenden Anwendung; und
einen oder mehrere Speicher, gekoppelt mit den ein oder mehreren Prozessoren und konfiguriert zum Versorgen der ein oder mehreren Prozessoren mit Befehlen.

2. System nach Anspruch 1, wobei der Screenshot-Befehl als Reaktion auf die Erkennung einer vorbestimmten Screenshot-Aktion erzeugt wird.

3. System nach Anspruch 1, wobei die Anwendung auf einem mobilen Gerät ausgeführt wird.

4. System nach Anspruch 1, wobei das Screenshot-Objekt zum Aufrufen eines Betriebssystems zum Erzeugen des Screenshot konfiguriert ist.

5. System nach Anspruch 1, wobei die ein oder mehreren Prozessoren ferner zum Erkennen einer vorbestimmten gemeinsamen Nutzung konfiguriert sind.

6. System nach Anspruch 5, wobei die ein oder mehreren Prozessoren ferner zum gemeinsamen Nutzen des Screenshot mit wenigstens einem Benutzer konfiguriert sind.

7. Verfahren, das Folgendes beinhaltet:
Empfangen (102) eines Screenshot-Befehls von einer Anwendung, wobei der Screenshot-Befehl einen Anwendungsszenarioparameter entsprechend der Anwendung beinhaltet, wobei der Anwendungsszenarioparameter einen Wert umfasst, der einen Anwendungstyp der Anwendung identifiziert;
Feststellen, dass der Anwendungsszenarioparameter einem passenden Anwendungsszenario entspricht, wobei sich das passende Anwendungsszenario unter mehreren möglichen Anwendungsszenarios befindet, wobei die mehreren möglichen Anwendungsszenarios mehrere Anwendungstypen umfassen;
Einholen einer Screenshot-Klasse entsprechend dem passenden Anwendungsszenario durch Abrufen der Screenshot-Klasse aus einem Speicher;
Erzeugen (104), mit einem oder mehreren Prozessoren, des Screenshot-Objekts wenigstens teilweise auf der Basis einer Screenshot-Klasse, wobei die Screenshot-Klasse ein oder mehrere spezifische Elemente umfasst, die mit dem Erzeugen eines mit dem Anwendungsszenarioparameter assoziierten Screenshot assoziiert sind, wobei die ein oder mehreren spezifischen Elemente wenigstens ein Aussehen des zu erzeugenden Screenshot beschreiben;
Erzeugen (106) des Screenshot von von der Anwendung angezeigtem Inhalt anhand des Screenshot-Objekts, wobei der Screenshot wenigstens teilweise auf der Basis der ein oder mehreren spezifischen Elemente erzeugt wird, die mit dem Erzeugen des mit dem Anwendungsszenarioparameter assoziierten Screenshot assoziiert sind; und
Senden (108) des Screenshot zu der anzuzeigenden Anwendung.

8. Verfahren nach Anspruch 7, wobei der Screenshot-Befehl als Reaktion auf die Erkennung einer vorbeschriebenen Screenshot-Aktion erzeugt wird.

9. Verfahren nach Anspruch 7, wobei die Anwendung auf einem mobilen Gerät ausgeführt wird.

10. System nach Anspruch 1 oder Verfahren nach Anspruch 7, wobei der Wert des Anwendungsszenarioparameters eines oder mehrere der Folgenden beinhaltet: einen nativen Anwendungsszenario-Parameterwert, einen Videowiedergabe-Anwendungsszenario-Parameterwert oder einen Spieleanwendungsszenario-Parameterwert, wobei der native Anwendungsszenario-Parameterwert mit einer nativen Anwendung assoziiert ist, wobei die native Anwendung eine betriebssystemspezifische Anwendung ist.

11. System nach Anspruch 1 oder Verfahren nach Anspruch 7, wobei in dem Fall, dass der Wert des Anwendungsszenarioparameters einen nativen Anwendungsszenario-Parameterwert umfasst, die Screenshot-Klasse eine native Anwendungs-Screenshot-Klasse umfasst, wobei der native Anwendungsszenarioparameter mit einer nativen Anwendung assoziiert ist, wobei die native Anwendung eine betriebssystemspezifische Anwendung ist.

12. System nach Anspruch 1 oder Verfahren nach Anspruch 7, wobei in dem Fall, dass der Wert des Anwendungsszenarioparameters einen Videowiedergabe-Anwendungsszenario-Parameterwert umfasst, die Screenshot-Klasse eine Videowiedergabeanwendungs-Screenshot-Klasse umfasst.

13. System nach Anspruch 1 oder Verfahren nach Anspruch 7, wobei in dem Fall, dass der Wert des Anwendungsszenarioparameters einen Spielewiedergabeszenario-Parameterwert umfasst, die Screenshot-Klasse eine Spieleanwendungs-Screenshot-Klasse umfasst.

14. System nach Anspruch 1 oder Verfahren nach Anspruch 7, wobei die Screenshot-Klasse entsprechend dem passenden Anwendungsszenario von einer Basis-Screenshot-Klasse abgeleitet ist.

15. Computerprogrammprodukt, wobei das Computerprogrammprodukt in einem nichtflüchtigen computerlesbaren Speichermedium ausgestaltet ist und Computerbefehle umfasst zum:
Empfangen (102) eines Screenshot-Befehls von einer Anwendung, wobei der Screenshot-Befehl einen Anwendungsszenarioparameter entsprechend der Anwendung beinhaltet, wobei der Anwendungsszenarioparameter einen Wert umfasst, der einen Anwendungstyp der Anwendung identifiziert;
Feststellen, dass der Anwendungsszenarioparameter einem passenden Anwendungsszenario entspricht, wobei sich das passende Anwendungsszenario unter mehreren möglichen Anwendungsszenarios befindet, wobei die mehreren möglichen Anwendungsszenarios mehrere Anwendungstypen umfassen;
Einholen einer Screenshot-Klasse entsprechend dem passenden Anwendungsszenario durch Abrufen der Screenshot-Klasse aus einem Speicher;
Erzeugen (104) eines Screenshot-Objekts wenigstens teilweise auf der Basis der Screenshot-Klasse, wobei die Screenshot-Klasse ein oder mehrere spezifische Elemente umfasst, die mit dem Erzeugen eines mit dem Anwendungsszenarioparameter assoziierten Screenshot assoziiert sind, wobei die ein oder mehreren spezifischen Elemente wenigstens ein Aussehen des zu erzeugenden Screenshot beschreiben;
Erzeugen (106) des Screenshot von von der Anwendung angezeigtem Inhalt anhand des Screenshot-Objekts, wobei der Screenshot wenigstens teilweise auf der Basis der ein oder mehreren spezifischen Elemente erzeugt wird, die mit dem Erzeugen des mit dem Anwendungsszenarioparameter assoziierten Screenshot assoziiert sind; und
Senden (108) des Screenshot zu der anzuzeigenden Anwendung.

## Revendications

1. Un système, comprenant :
un ou plusieurs processeurs configurés de façon à :
recevoir (102) une commande d'instantané d'écran à partir d'une application, où la commande d'instantané d'écran comprend un paramètre de scénario d'application correspondant à l'application, où le paramètre de scénario d'application comprend une valeur qui identifie un type d'application de l'application,
déterminer que le paramètre de scénario d'application correspond à un scénario d'application apparié, où le scénario d'application apparié est parmi une pluralité de scénarios d'application possibles, où la pluralité de scénarios d'application possibles comprend une pluralité de types d'application,
obtenir une classe d'instantané d'écran correspondant au scénario d'application apparié par la récupération de la classe d'instantané d'écran à partir d'un espace mémoire,
générer (104) un objet d'instantané d'écran en fonction au moins en partie de la classe d'instantané d'écran, où la classe d'instantané d'écran comprend un ou plusieurs éléments personnalisés associés à la génération d'un instantané d'écran associé au paramètre de scénario d'application, où les un ou plusieurs éléments personnalisés décrivent au moins une apparence de l'instantané d'écran à générer,
générer (106) l'instantané d'écran à partir d'un contenu affiché par l'application au moyen de l'objet d'instantané d'écran, où l'instantané d'écran est généré en fonction au moins en partie des un ou plusieurs éléments personnalisés associés à la génération de l'instantané d'écran associé au paramètre de scénario d'application, et
envoyer (108) l'instantané d'écran à l'application à afficher, et
une ou plusieurs mémoires couplées aux un ou plusieurs processeurs et configurées de façon à fournir des instructions aux un ou plusieurs processeurs.

2. Le système selon la Revendication 1, où la commande d'instantané d'écran est générée en réponse à la détection d'une action d'instantané d'écran prédéterminée.

3. Le système selon la Revendication 1, où l'application est exécutée au niveau d'un dispositif mobile.

4. Le système selon la Revendication 1, où l'objet d'instantané d'écran est configuré de façon à invoquer un système d'exploitation destiné à la génération de l'instantané d'écran.

5. Le système selon la Revendication 1, où les un ou plusieurs processeurs sont configurés en outre de façon à détecter une action de partage prédéterminée.

6. Le système selon la Revendication 5, où les un ou plusieurs processeurs sont configurés en outre de façon à partager l'instantané d'écran avec au moins un utilisateur.

7. Un procédé comprenant :
la réception (102) d'une commande d'instantané d'écran à partir d'une application, où la commande d'instantané d'écran comprend un paramètre de scénario d'application correspondant à l'application, où le paramètre de scénario d'application comprend une valeur qui identifie un type d'application de l'application,
la détermination que le paramètre de scénario d'application correspond à un scénario d'application apparié, où le scénario d'application apparié est parmi une pluralité de scénarios d'application possibles, où la pluralité de scénarios d'application possibles comprend une pluralité de types d'application,
l'obtention d'une classe d'instantané d'écran correspondant au scénario d'application apparié par la récupération de la classe d'instantané d'écran à partir d'un espace mémoire,
la génération (104), au moyen d'un ou de plusieurs processeurs, de l'objet d'instantané d'écran en fonction au moins en partie d'une classe d'instantané d'écran, où la classe d'instantané d'écran comprend un ou plusieurs éléments personnalisés associés à la génération d'un instantané d'écran associé au paramètre de scénario d'application, où les un ou plusieurs éléments personnalisés décrivent au moins une apparence de l'instantané d'écran à générer,
la génération (106) de l'instantané d'écran à partir d'un contenu affiché par l'application au moyen de l'objet d'instantané d'écran, où l'instantané d'écran est généré en fonction au moins en partie des un ou plusieurs éléments personnalisés associés à la génération de l'instantané d'écran associé au paramètre de scénario d'application, et
l'envoi (108) de l'instantané d'écran à l'application à afficher.

8. Le procédé selon la Revendication 7, où la commande d'instantané d'écran est générée en réponse à la détection d'une action d'instantané d'écran prédéterminée.

9. Le procédé selon la Revendication 7, où l'application est exécutée au niveau d'un dispositif mobile.

10. Le système selon la Revendication 1 ou le procédé selon la Revendication 7, où la valeur du paramètre de scénario d'application comprend une ou plusieurs valeurs parmi les suivantes : une valeur de paramètre de scénario d'application native, une valeur de paramètre de scénario d'application de lecture vidéo ou une valeur de paramètre de scénario d'application de jeu, où la valeur de paramètre de scénario d'application native est associée à une application native, où l'application native est une application spécifique à un système d'exploitation.

11. Le système selon la Revendication 1 ou le procédé selon la Revendication 7, où, dans le cas où la valeur du paramètre de scénario d'application comprend une valeur de paramètre de scénario d'application native, la classe d'instantané d'écran comprend une classe d'instantané d'écran d'application native, où le paramètre de scénario d'application native est associé à une application native, où l'application native est une application spécifique à un système d'exploitation.

12. Le système selon la Revendication 1 ou le procédé selon la Revendication 7, où, dans le cas où la valeur du paramètre de scénario d'application comprend une valeur de paramètre de scénario d'application de lecture vidéo, la classe d'instantané d'écran comprend une classe d'instantané d'écran d'application de lecture vidéo.

13. Le système selon la Revendication 1 ou le procédé selon la Revendication 7, où, dans le cas où la valeur du paramètre de scénario d'application comprend une valeur de paramètre de scénario d'application de jeu, la classe d'instantané d'écran comprend une classe d'instantané d'écran d'application de jeu.

14. Le système selon la Revendication 1 ou le procédé selon la Revendication 7, où la classe d'instantané d'écran correspondant au scénario d'application apparié est dérivée d'une classe d'instantané d'écran de base.

15. Un produit de programme informatique, le produit de programme informatique étant incorporé dans un support à espace mémoire lisible par ordinateur non transitoire et comprenant des instructions informatiques destinées à :
la réception (102) d'une commande d'instantané d'écran à partir d'une application, où la commande d'instantané d'écran comprend un paramètre de scénario d'application correspondant à l'application, où le paramètre de scénario d'application comprend une valeur qui identifie un type d'application de l'application,
la détermination que le paramètre de scénario d'application correspond à un scénario d'application apparié, où le scénario d'application apparié est parmi une pluralité de scénarios d'application possibles, où la pluralité de scénarios d'application possibles comprend une pluralité de types d'application,
l'obtention d'une classe d'instantané d'écran correspondant au scénario d'application apparié par la récupération de la classe d'instantané d'écran à partir d'un espace mémoire,
la génération (104) d'un objet d'instantané d'écran en fonction au moins en partie de la classe d'instantané d'écran, où la classe d'instantané d'écran comprend un ou plusieurs éléments personnalisés associés à la génération d'un instantané d'écran associé au paramètre de scénario d'application, où les un ou plusieurs éléments personnalisés décrivent au moins une apparence de l'instantané d'écran à générer,
la génération (106) de l'instantané d'écran à partir d'un contenu affiché par l'application au moyen de l'objet d'instantané d'écran, où l'instantané d'écran est généré en fonction au moins en partie des un ou plusieurs éléments personnalisés associés à la génération de l'instantané d'écran associé au paramètre de scénario d'application, et
l'envoi (108) de l'instantané d'écran à l'application à afficher.
